# FASCICULE DE BREVET EUROPEEN

(11) **EP 1 761 835 B1**
(45) Date de publication et mention de la délivrance du brevet: **26.10.2011**
(21) Numéro de dépôt: 05771823.1
(22) Date de dépôt: 27.06.2005
(51) Int. Cl.: G06F 1/00

(54) **MODULE DE SÉCURITÉ ET MÉTHODE DE PERSONNALISATION D'UN TEL MODULE DE SÉCURITÉ**
SICHERHEITSMODUL UND VERFAHREN ZUR INDIVIDUELLEN ANPASSUNG EINES DERARTIGEN MODULS
SECURITY MODULE AND METHOD OF CUSTOMISING ONE SUCH MODULE

(30) Priorité: 29.06.2004 EP 04103053
(43) Date de publication de la demande: 14.03.2007
(73) Titulaire: Nagravision S.A., 1033 Cheseaux-sur-Lausanne (CH)
(72) Inventeur: STRANSKY, Philippe, 1033 Cheuseaux-sur-Lausanne (CH)
(74) Mandataire: Leman Consulting S.A.
(86) Numéro de dépôt international: PCT/EP2005/052988
(87) Numéro de publication internationale: WO 2006/000584

(56) Documents cités:
- EP-A- 1 178 406
- US-B1- 6 725 374

## Description

La présente invention concerne le domaine des modules de sécurité sécurisés comportant au moins un microprocesseur et une mémoire programme. L'invention concerne également la personnalisation d'un tel module de sécurité ainsi que l'identification d'un module de sécurité dont le contenu a été rendu public.

Ces modules de sécurité sont utilisés dans des systèmes mettant en oeuvre des opérations cryptographiques et sont livrés sous forme monobloc. Ils sont soit réalisés sur une seule puce de silicium, soit assemblés sur un support et noyés dans une résine ou protégés par une feuille recouvrant les divers éléments et agissant comme fusible en cas de tentative d'intrusion.

Ces modules sécurisés ont une mémoire programme contenant en particulier un programme de démarrage et un ou des programmes opérationnels. Le programme de démarrage est exécuté lors de l'enclenchement du processeur ou à chaque remise à zéro (reset). Ce programme de démarrage est stocké dans une mémoire de type ROM c'est-à-dire que l'accès peut se faire en lecture uniquement.

Le programme opérationnel est stocké dans une mémoire de type réinscriptible, en général de type EEPROM, NVRAM ou Flash.

Lorsque le programme de démarrage a terminé sa vérification, il débute l'exécution du programme opérationnel à une adresse convenue.

Une des attaques connues pour découvrir le contenu de la mémoire d'un module de sécurité est de rechercher une faille de sécurité telle qu'un débordement de mémoire qui permettrait de prendre le contrôle du processeur. Une fois cette prise de contrôle réussie, il est possible de transférer le contenu de la mémoire vers l'extérieur et d'analyser le mécanisme de sécurité et les clés utilisées.

A partir de la connaissance du contenu de la mémoire, on peut obtenir les clés servant à gérer les différents droits et accès aux services que contrôle le processeur. Ainsi, si un changement de clés intervient, ordonné par le centre de gestion, cette commande de changement sera encryptée par une clé présente dans la mémoire programme. En disposant de cette clé, on pourra décrypter le message de changement de clé et mettre également à jour le contenu de cette nouvelle clé.

On constate donc que lorsque la sécurité d'un module de sécurité a été violée une fois par une personne malveillante, tous les changements initiés par le centre de gestion sont sans effet sur la sécurité car les moyens de changement (nouvelle clé de transmission par exemple) utilisent des clés que cette personne a déjà en sa possession. Elle peut donc décrypter le message de mise à jour et changer également sa clé de transmission.

Lorsque la sécurité d'un module de sécurité a été violée et que le contenu de la mémoire programme est donc connu, il arrive que la personne malveillante ayant violé la sécurité de ce module publie les codes informatiques correspondant au contenu de la mémoire programme, cette publication étant notamment faite sur un réseau tel qu'Internet. Ceci permet à des tiers, possesseurs de cartes vierges, de copier ces codes et de créer ainsi des cartes clones parfaitement fonctionnelles, de façon totalement illégale.

L'un des moyens pour limiter ces activités illégales consiste à augmenter la sécurité des modules, de sorte qu'il est particulièrement difficile de violer la sécurité de ce module.

Un autre moyen pour limiter fortement ces activités illégales consiste à détecter le module de sécurité dont la sécurité a été violée et ayant permis le clonage et d'agir sur ce module en le désactivant, lui et les clones qu'il a permit de réaliser.

Le document US 6,725,374 décrit un module de sécurité utilisant le premier moyen mentionné ci-dessus, à savoir l'amélioration de la sécurité par rapport aux modules antérieurs. En effet, dans le module décrit dans ce brevet, la découverte de clés est rendue plus difficile grâce à l'adjonction, dans le code informatique du module, d'éléments de "brouillage" qui brouillent des informations qui peuvent être utilisées pour extraire des clés, à savoir la consommation électrique. Ces éléments de brouillage sont formés de modules dont l'ordre d'exécution n'a pas d'importance pour le déroulement du programme. Ces éléments sont utilisés de façon aléatoire, de sorte que le traitement de deux signaux d'entrée identiques ne donnera pas deux signaux de sortie identiques. Si, malgré cette difficulté supplémentaire, une personne arrive à déterminer le contenu du module de sécurité, ce code pourra être publié et réutilisé par des tiers, sans qu'il soit possible der-retrouver la source du code publié.

La présente invention se propose d'utiliser le deuxième moyen mentionné ci-dessus, c'est-à-dire qu'elle propose d'introduire dans le module, un moyen permettant la détection du module ayant servi à une fraude.

De façon bien connue, chaque module de sécurité comporte un numéro d'identification unique. Généralement, les personnes capables d'extraire les codes informatiques d'un module de sécurité sont également capables de détecter le numéro unique de leur module, à partir d'une analyse relativement sommaire du contenu de ce module. Ce numéro unique n'est pas publié lors de la publication des codes informatiques.

Ceci empêche d'une part que l'on identifie la personne malveillante et d'autre part que l'on désactive le module d'origine et ses clones.

L'objet de la présente invention est de proposer une méthode et un module de sécurité comportant des moyens d'identification du module de sécurité lors de publication illégale du code de ce module, quand bien même le tiers malveillant aurait retiré l'identifiant de ce module. Dans la présente invention, la lutte contre le clonage de modules de sécurité ne consiste donc pas à améliorer la sécurité de ces modules, mais à faciliter la détection des modules ayant servi au clonage, de façon à rendre inopérants ces modules.

Le brevet européen EP 1 178 406 décrit un procédé dans lequel un numéro de série unique d'un circuit imprimé est mémorisé dans une mémoire. Dans cette invention, le numéro de série est tout d'abord lu à partir d'un code barre, puis converti en informations numériques. Ces informations sont éventuellement chiffrées avant d'être introduites dans une ou plusieurs mémoires. Le but de l'invention est d'une part de rendre difficile la détection du numéro de série et d'autre part d'empêcher une personne non-autorisée de connaître et de modifier ce numéro de série. Pour cacher le numéro de série, il est mémorisé dans une mémoire de grande taille, de sorte qu'il est difficile à repérer parmi toutes les autres informations mémorisées. Pour empêcher de connaître et de modifier le numéro, il est chiffré.

Le fait de cacher le numéro de série ne permet pas de résoudre de façon satisfaisante le problème de l'invention. En effet, le numéro de série est mémorisé sous la forme d'une valeur dans un emplacement donné de la mémoire. Si une personne ou un groupe de personnes détermine l'emplacement du numéro de série, cet emplacement pourra être rendu public. Lors de la publication du code informatique nécessaire pour réaliser un module de sécurité cloné, il suffira donc d'éviter de publier le contenu de cet emplacement pour éviter que son module de sécurité ne soit détecté.

Le but de l'invention est atteint par un module de sécurité comprenant un microprocesseur, une mémoire programme contenant au moins un programme opérationnel et un moyen d'identification unique dudit module, **caractérisé en ce que** ce moyen d'identification est constitué d'un ensemble de codes informatiques factice, compatible avec son exécution par ledit microprocesseur du module et stocké dans la mémoire programme.

Ce but est également atteint par une méthode de personnalisation d'un module de sécurité par un identifiant unique, ce module comprenant un microprocesseur et une mémoire programme contenant au moins un programme opérationnel, **caractérisée en ce qu'**elle comprend les étapes suivantes:
- génération d'un ensemble unique de codes informatiques, dénommés codes informatiques factices, compatibles avec leur exécution par ledit microprocesseur;
- écriture de cet ensemble de codes dans la mémoire programme dans des emplacements mémoires spécifiques.

Le but de l'invention est également atteint par une méthode d'identification d'un module de sécurité tel que défini dans l'une quelconque des revendications 1 à 6 et dont les codes informatiques ont été rendus accessibles au public, ce procédé comportant les étapes de:
- extraction des codes informatiques factices parmi les codes informatiques rendus accessibles au public;
- traitement desdits codes informatiques factices selon des règles prédéfinies de façon à en déduire le moyen d'identification dudit module de sécurité.

La méthode de personnalisation de l'invention a pour principal avantage que les codes informatiques factices sont considérés par un tiers malveillant comme faisant partie du programme et semblent donc nécessaires à la reproduction d'un module clone.

Ces codes informatiques factices sont noyés dans le programme opérationnel, de sorte qu'il est difficile de repérer quelles sont les informations réellement nécessaires au bon fonctionnement du module et quelles sont celles utilisées pour générer le numéro d'identification.

Le module de sécurité selon l'invention et la méthode associée permettent d'inciter une personne malveillante ayant publié les codes informatiques d'un module de sécurité piraté à également publier les informations qui permettent de déterminer le numéro ou un numéro d'identification unique du module de sécurité. Grâce à ceci, il est relativement aisé de déterminer la provenance du module de sécurité d'origine. A partir de là, il existe des méthodes permettant de rendre inopérant ce module d'origine de même que les clones qu'il a permis de réaliser. L'une de ces méthodes est par exemple décrite dans la demande de brevet européen EP 04100969.7 du même déposant.

L'invention sera mieux comprise grâce à la description détaillée qui va suivre et qui se réfère aux dessins annexés qui sont donnés à titre d'exemple nullement limitatif, dans lesquels :
- la figure 1 illustre de façon générale un module de sécurité selon la présente invention;
- la figure 2 représente un premier mode de réalisation d'une partie du module de sécurité de la figure 1;
- la figure 3 illustre un deuxième mode de réalisation du module de sécurité de la figure 1; et
- la figure 4 illustre un mode de réalisation particulier de la méthode de l'invention.

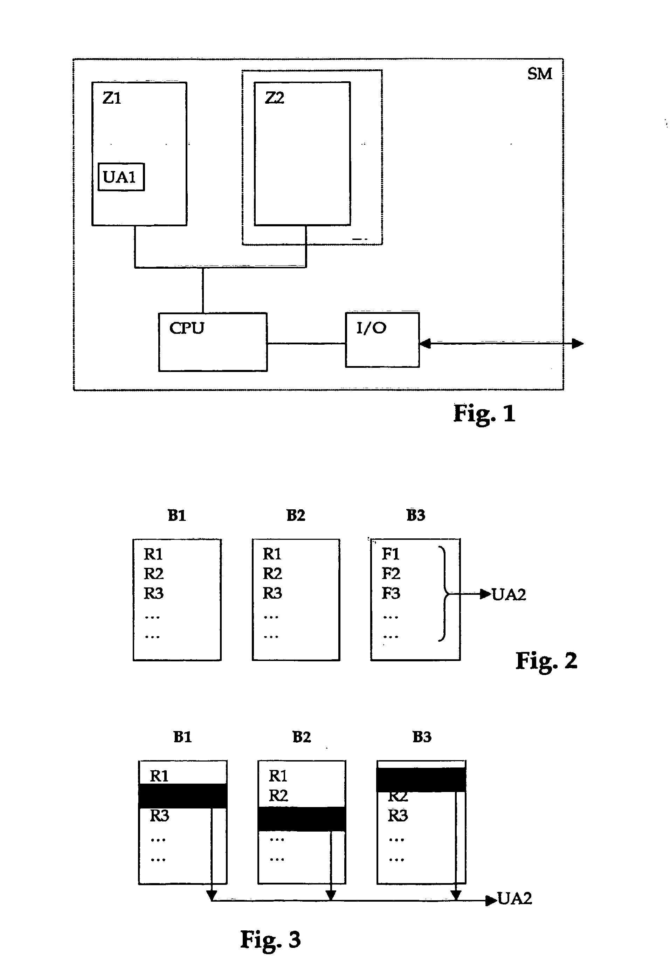

En référence à la figure 1, le module de sécurité SM est un module processeur sécurisé. A ce titre, il dispose d'au moins un microprocesseur CPU et d'une mémoire programme contenant notamment un programme opérationnel. Dans le mode de réalisation représenté, la mémoire programme contient une première zone Z1 de démarrage et une seconde zone Z2 dite zone de travail. La première zone de démarrage est constituée par tout ou partie de mémoire ROM donc non réinscriptible. Il se peut qu'une partie comprenne des places mémoires en RAM ou EEPROM pour des variables entre autre. Elle est dite "de démarrage" du fait qu'elle est la première à être exécutée lors de la mise sous tension du module de sécurité.

De façon conventionnelle, le module de sécurité peut contenir un numéro unique d'identification UA1 qui peut être mémorisé dans une zone mémoire à lecture seule. Ce numéro UA1 est généralement accessible par l'utilisateur sous forme de numéro de série qui peut être imprimé sur le module de sécurité lui-même ou sur une documentation annexe par exemple.

La zone de travail Z2 contient le programme opérationnel et les données. Cette zone est constituée de mémoire non volatile, mais avec possibilité d'écriture telle que de l'EEPROM. La zone Z2 peut également contenir de la mémoire volatile comme de la RAM. En fait, cette zone n'est généralement pas homogène et peut comprendre plusieurs mémoires du type ROM, RAM, EEPROM, NVRAM ou Flash.

Le microprocesseur CPU est dirigé automatiquement sur la première zone Z1 lors d'un enclenchement ou un redémarrage (reset). C'est là que les premières opérations de sécurité sont exécutées. Ces opérations vont utiliser la première zone mémoire, mais également la zone de travail Z2 si nécessaire.

Sur la figure 1, le bloc I/O illustre les moyens de communication vers l'extérieur du module SM, moyens indispensables pour utiliser les foncions cryptographiques et les droits stockés dans la mémoire. C'est également par ce biais que des données sont extraites accidentellement de la zone Z2 par une faille de sécurité telle que décrite plus haut.

Comme indiqué précédemment, la zone de travail Z2 contient le programme opérationnel destiné au fonctionnement du module. Une forme de réalisation de la structure du programme opérationnel est illustrée de façon détaillée par les figures 2 et 3. Ce programme opérationnel est composé de codes informatiques que l'on peut représenter sous forme de lignes d'instructions ayant des fonctions déterminées si l'on se place avant la compilation d'un tel programme.

Pour la clarté de la description, il est supposé que les instructions sont réparties en blocs d'instructions référencés B1, B2, B3, qui répondent à une syntaxe donnée.

Dans le module de l'invention, au moins deux types de lignes d'instructions coexistent. Le premier type correspond à des instructions conventionnelles dites lignes réelles, qui sont exécutées par le microprocesseur selon des critères définis et qui produisent un résultat "utile" pour le fonctionnement du programme. Le deuxième type d'instructions sont des instructions qui ne sont pas exécutées réellement par le microprocesseur et/ou qui ne produisent pas de résultat directement. Ces lignes d'instructions, dites lignes factices dans la suite du texte, sont par contre utilisées pour former un moyen d'identification unique UA2 associé au module de sécurité en question. En fait, les lignes factices peuvent être soit des instructions qui ne sont pas exécutées par le microprocesseur, soit des instructions qui sont réellement exécutées, mais qui ne produisent pas de résultat qui influence le déroulement du programme opérationnel. En d'autre terme, le fonctionnement du programme est le même, que ces codes soient présents ou non. Les termes de "codes factices" ou "lignes factices" doivent être compris comme recouvrant ces deux modes de réalisation.

En référence plus particulièrement au mode de réalisation illustré par la figure 2, le programme opérationnel comprend un certain nombre de blocs d'instructions réelles B1, B2, qui peuvent former des routines de programme, ainsi qu'un ensemble de codes informatiques factice, formant un bloc d'instruction B3, qui a le même aspect qu'un bloc d'instructions conventionnel, mais qui est toutefois différent pour chaque module de sécurité. Ces codes informatiques sont compatibles pour une exécution par le microprocesseur et répondent à la syntaxe dudit microprocesseur de sorte qu'il n'est pas possible, par une simple analyse des codes, de repérer les codes réels, qui seront exécutés, et les codes factices, qui ne seront pas exécutés ou n'auront pas d'effet sur le programme opérationnel. Les instructions que contient cet ensemble factice sont des lignes factices qui ne sont généralement pas exécutées par le microprocesseur ou leur exécution n'influence pas le fonctionnement du programme; elles ne sont utilisées que pour former le moyen d'identification unique UA2 du module. Les instructions réelles sont formées de lignes réelles indiquées par R dans les figures 2 et 3 et les lignes factices sont représentées par les références F dans ces figures. Ce bloc d'instructions B3 peut être de préférence inséré dans le programme opérationnel pour mieux se dissimuler. Les codes informatiques factices servant à la formation du moyen d'identification peuvent également contenir des valeurs de registres ou de variables par exemple.

Selon la variante de réalisation telle qu'illustrée par la figure 3, le module de sécurité comporte, contrairement à l'exemple précédent dans lequel les lignes factices sont regroupées ensemble dans la mémoire du programme opérationnel, un certain nombre de lignes d'instructions factices F, réparties parmi les instructions réelles R. Ces lignes factices forment un ensemble de codes informatiques unique et différent pour chaque module de sécurité.

Étant donné que généralement, les lignes d'instructions sont effectuées les unes après les autres, il est important que ces lignes d'instructions ne soient pas exécutées ou que leur exécution n'affecte pas le bon déroulement du programme opérationnel. Il est également important que ces codes informatiques spécifiques ne soient pas ou difficilement détectés par une personne malveillante.

Pour concilier ces contraintes, plusieurs modes de réalisation sont disponibles. Dans l'un des modes de réalisation, les lignes factices comportent une information spécifique indiquant que la ligne en question est factice et qu'elle ne doit par conséquent pas être exécutée par le microprocesseur.

Selon un autre mode de réalisation, certaines instructions réelles contiennent des indications relatives à l'emplacement des lignes factices. Une telle indication peut par exemple être faite sous la forme d'une instruction indiquant qu'il ne faut pas traiter une ligne disposée à un emplacement mémoire déterminé.

Les instructions consistant à ne pas traiter les lignes factices peuvent être dissimulées, par exemple en indiquant que la ligne en question doit être sautée seulement si une condition est remplie. Il est alors possible de s'arranger pour que cette condition soit toujours remplie. Il est également possible d'ajouter à une ligne réelle, une indication selon laquelle la ligne suivante est factice.

Selon une autre forme de réalisation, rien dans les codes informatiques ne distingue une ligne factice d'une ligne réelle. Le module de sécurité contient une information mémorisée indiquant l'emplacement des codes informatiques que le microprocesseur ne doit pas exécuter.

Une variante telle que brièvement mentionnée précédemment peut également consister à utiliser comme ligne factice, une instruction qui est réellement exécutée par le microprocesseur, mais qui est sans effet sur la suite de l'exécution du programme. Une telle instruction pourrait être une indication que le programme doit passer à la ligne suivante. Il est bien entendu possible de rendre ce genre d'instructions "inutiles" difficiles à repérer, par exemple en écrivant l'instruction sous la forme d'un saut conditionnel, en indiquant que le passage à la ligne suivante doit se faire seulement si une condition déterminée est remplie, tout en s'arrangeant que cette condition soit toujours remplie. Une autre forme consisterait à envoyer le programme à une adresse prédéterminée quelconque si une condition est remplie, tout en s'arrangeant que cette condition ne soit jamais remplie. Une autre forme consisterait à modifier une location mémoire que l'on sait sans importante. Ces instructions "inutiles" sont indiquées dans le texte comme "n'ayant pas d'influence sur l'exécution par le microprocesseur, du programme opérationnel", du fait que ces instructions peuvent être supprimées sans que le résultat de l'exécution du programme opérationnel ne soit affecté.

Une manière particulièrement bien adaptée pour rendre difficile la détection de lignes factices par une personne malveillante est l'obfuscation ou la dissimulation, procédé qui consiste à rendre particulièrement complexe, la compréhension d'un code informatique décompilé.

Selon une variante de l'invention, il est également possible que seulement une partie des lignes factices servent à l'identification du module de sécurité. Les lignes factices qui ne servent pas à l'identification du module de sécurité sont uniquement présentes pour compliquer la compréhension du code informatique et pour empêcher un pirate de détecter quelles sont les informations qu'il doit publier s'il veut permettre de réaliser un clone fonctionnel et quelles sont les informations qu'il doit omettre s'il ne veut pas que le numéro unique d'identification de son module de sécurité soit également divulgué.

De telles lignes factices supplémentaires peuvent être insérées aussi bien dans le mode de réalisation dans lequel le module comporte un bloc factice que dans celui où les instructions sont disséminées dans les instructions réelles.

Il est à noter que les deux modes de réalisation, à savoir celui illustré par la figure 2 et celui illustré par la figure 3 peuvent également être combinés, c'est-à-dire que des instructions factices peuvent être introduites dans un bloc déterminé, alors que d'autres instructions factices sont en outre réparties parmi les instructions réelles.

Ibest également possible de générer plus d'un moyen d'identification ou d'introduire des informations qui permettent de générer plusieurs fois le même moyen d'identification unique UA2, de sorte que même si certaines des lignes factices sont détectées et ne sont donc pas publiées, il est malgré tout possible de déterminer le moyen d'identification UA2.

La réalisation du module de sécurité selon l'invention comporte une phase de personnalisation dans laquelle on introduit des données spécifiques au module. L'invention est également associée à une étape de détection d'un module dont les codes informatiques ont été publiés. Cette étape de détection consiste à extraire, à partir des informations publiées, les données spécifiques au module de sécurité.

La méthode de personnalisation selon l'invention consiste essentiellement à générer un ensemble unique de codes informatiques, puis à écrire ces codes dans la mémoire programme.

Cette méthode de personnalisation dépend en premier lieu du type de module de sécurité choisi et plus particulièrement de l'emplacement des codes informatiques factices. En effet, lorsque les codes factices sont disposés dans la mémoire programme sous forme de bloc séparé, les codes factices peuvent être générés sous la forme d'un bloc, puis introduits dans le module.

Lorsque les codes factices sont dispersés dans le code informatique réel, les codes réels formant le programme opérationnel sont mémorisés de telle façon qu'ils comportent des emplacements libres. Des codes factices sont ensuite générés, puis insérés dans ces emplacements libres.

Dans le mode de réalisation dans lequel les codes factices sont des codes réellement exécutés par le microprocesseur, ces codes n'ayant toutefois aucun effet sur le déroulement du programme opérationnel, il est possible d'utiliser un répertoire de codes. Ce répertoire contient un ensemble de codes informatiques prédéfinis qui n'influencent pas le déroulement du programme opérationnel. Ces codes peuvent être, comme indiqués précédemment, un saut conditionnel, l'écriture d'une valeur dans une zone mémoire, la modification d'une valeur ou toute autre instruction qui ne modifie pas le déroulement du programme, que l'instruction soit exécutée ou non.

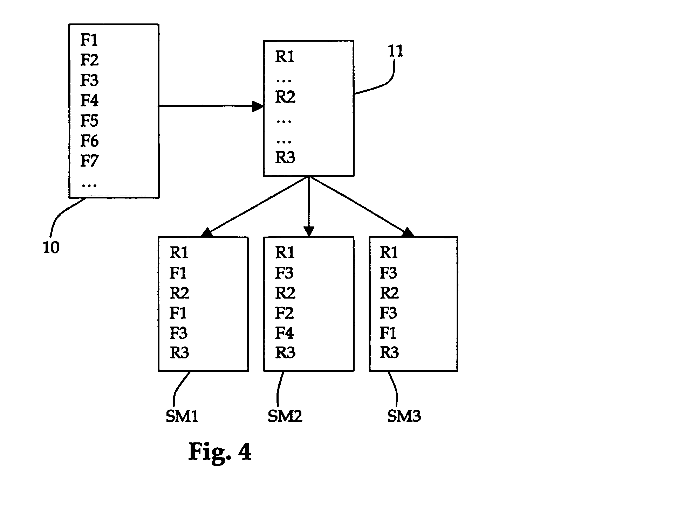

Il est également possible de prévoir un procédé qui génère automatiquement des moyens d'identification à partir des codes factices contenus dans le répertoire. En effet, en connaissant le nombre de lignes d'instructions libres et éventuellement la taille des blocs à insérer, il est possible de puiser parmi les instructions de la bibliothèque, un certain nombre de codes de façon à remplir les lignes vides du programme opérationnel et de telle façon que chaque module de sécurité utilise un ensemble d'instructions unique. Cette unicité peut se faire aussi bien par les codes informatiques utilisés que par l'ordre d'utilisation de ces codes. Ce procédé est représenté schématiquement par la figure 4 dans laquelle la référence 10 illustre le répertoire des codes factices F1, F2,... . La référence 11 représente les codes informatiques réels R1, R2,... formant le programme opérationnel. Ces codes comportent des emplacements mémoires vides.

Lors de la personnalisation des modules de sécurité, un certain nombre de codes informatiques sont choisis parmi les codes factices mémorisés dans le répertoire, de telle façon que deux modules de sécurité ne contiennent pas les mêmes codes. Ces codes sont introduits dans les emplacements mémoires libres du programme opérationnel. Dans l'exemple illustré par la figure 4, les codes factices des modules de sécurité ayant les références SM1, SM2 et SM3 sont respectivement les ensembles (F1, F1, F3), (F3, F2, F4) et (F3, F3, F1).

Le procédé de personnalisation peut comporter en outre une étape visant à rendre plus complexe la détection de codes informatiques factices. En particulier, lorsque les codes factices sont regroupés dans un emplacement mémoire déterminé sous forme de bloc, il est judicieux d'éviter qu'une simple comparaison des codes informatiques de deux modules de sécurité dont la sécurité a été violée permette à une personne malveillante de repérer les codes factices et donc d'éviter leur publication. Pour résoudre ce problème, une étape d'obfuscation ou de dissimulation est bien adaptée.

L'étape de détection d'un module dont les codes informatiques ont été publiés telle que mentionnée ci-dessus consiste à extraire, à partir des informations publiées, le moyen d'identification unique du module de sécurité, d'une part pour éventuellement retrouver le titulaire du module d'origine et d'autre part pour rendre inopérant le module et les clones qu'il a permis de réaliser.

Cette étape de détection consiste essentiellement à comparer les codes informatiques publiés avec ceux qui ont été introduits dans les modules de sécurité lors de la phase de personnalisation. Pour ceci, différents moyens sont envisageables. En particulier, une comparaison "ligne par ligne" des codes publiés et des codes générés est possible. Une autre manière de réaliser cette comparaison consiste à extraire des codes publiés, les codes factices, puis à appliquer une opération à ces codes factices. Une opération basique qu'il est possible d'effectuer est la concaténation des bits formant les codes factices. Une autre opération peut consister à déterminer une signature (hash) du bloc d'instructions. En fait, toute opération permettant d'obtenir une valeur unique à partir d'un bloc d'instructions unique peut être utilisée. Cette même opération est appliquée aux codes informatiques générés lors de la phase de personnalisation, puis les valeurs uniques sont comparées.

Les instructions factices disséminées sont traitées comme dans le cas précédent, illustré par la figure 2, de façon à déterminer le moyen unique d'identification UA2 du module de sécurité.

Lorsque le moyen d'identification d'un module de sécurité dont la sécurité a été violée a été déterminé, il est alors possible de rendre inopérant le module de sécurité d'origine ainsi que les modules clonés à partir de ce module d'origine.

D'autres variantes évidentes de réalisation non décrites en détail ci-dessus font également partie de l'invention. En particulier, il est possible d'introduire des codes informatiques factices permettant de générer plus d'un moyen d'identification par module de sécurité. A titre d'exemple, un premier moyen d'identification pourrait être constitué par un bloc d'instructions séparées et un autre moyen d'identification par des codes disséminés.

Il est également possible d'introduire des codes factices redondants, de sorte que le moyen d'identification puisse être extrait même si une partie des codes factices est éliminée lors de la publication.

Il est possible de prévoir qu'un même moyen d'identification UA2 soit utilisé non pas pour un module de sécurité unique, mais pour un groupe de modules de sécurité. Ceci est intéressant dans le cas où le groupe de modules appartient à une même personne ou de façon plus générale à une même entité. Une combinaison des différents modes de réalisation ci-dessus est également envisageable, c'est-à-dire par exemple qu'un module de sécurité peut contenir un premier moyen d'identification commun à un groupe de modules et un deuxième moyen d'identification unique par module.

Le moyen d'identification UA2 peut également être défini à partir de codes informatiques représentant des valeurs dans des registres.

En règle générale, il n'est pas prévu que le moyen d'identification UA2 remplace le numéro d'identification UA1 conventionnellement contenu dans un module de sécurité. Le premier numéro d'identification UA1 est présent dans le module et pourra par exemple être imprimé sur le module si celui-ci a la forme d'une carte à puce ou d'une clé par exemple.

Par opposition à ceci, le moyen d'identification UA2 sera tenu secret, de même que l'existence même d'un deuxième numéro d'identification UA2.

## Revendications

1. Module de sécurité comprenant un microprocesseur, une mémoire programme contenant au moins un programme opérationnel et un moyen d'identification unique dudit module, **caractérisé en ce que** ce moyen d'identification (UA2) est constitué d'un ensemble de codes informatiques factice, compatible avec son exécution par ledit microprocesseur du module et stocké dans la mémoire programme.

2. Module de sécurité selon la revendication 1, **caractérisé en ce que** lesdits codes informatiques sont placés dans un bloc d'instructions spécifiques.

3. Module de sécurité selon la revendication 1, **caractérisé en ce que** lesdits codes informatiques factices sont répartis parmi les codes informatiques formant le programme opérationnel.

4. Module de sécurité selon la revendication 2 ou 3, **caractérisé en ce que** lesdits codes informatiques factices ne sont pas exécutés par ledit microprocesseur.

5. Module de sécurité selon la revendication 2 ou 3, **caractérisé en ce que** lesdits codes informatiques factices ne modifient pas le déroulement du programme opérationnel exécuté par ledit microprocesseur.

6. Module de sécurité selon la revendication 1, **caractérisé en ce que** ledit module comprend en outre un ensemble de codes informatiques factices qui ne sont utilisés ni pour le fonctionnement du module de sécurité, ni pour former le moyen d'identification.

7. Méthode de personnalisation d'un module de sécurité par un identifiant unique, ce module comprenant un microprocesseur et une mémoire programme contenant au moins un programme opérationnel, **caractérisée en ce qu'**elle comprend les étapes suivantes:
- génération d'un ensemble unique de codes informatiques, dénommés codes informatiques factices, compatibles avec leur exécution par ledit microprocesseur;
- écriture de cet ensemble de codes dans la mémoire programme dans des emplacements mémoires spécifiques.

8. Méthode de personnalisation selon la revendication 7, **caractérisé en ce que** les codes informatiques factices disposés dans lesdits emplacements mémoires spécifiques ne sont pas exécutés par ledit microprocesseur.

9. Méthode de personnalisation selon la revendication 7, **caractérisé en ce que** les codes informatiques factices disposés dans lesdits emplacements mémoires spécifiques n'ont pas d'influence sur l'exécution par ledit microprocesseur du programme opérationnel.

10. Méthode de personnalisation selon la revendication 8 ou 9, **caractérisé en ce que** lesdits codes informatiques factices formant ledit ensemble unique sont choisis parmi une bibliothèque de codes informatiques.

11. Méthode de personnalisation selon la revendication 7, **caractérisé en ce que** lesdits codes informatiques factices forment un bloc d'instruction distinct des codes informatiques constituant le programme opérationnel.

12. Méthode de personnalisation selon la revendication 7, **caractérisé en ce que** lesdits codes informatiques factices sont dispersés parmi les codes informatiques constituant le programme opérationnel.

13. Méthode de personnalisation selon l'une quelconque des revendications 7 à 12, **caractérisé en ce que** les codes informatiques sont traités de façon à dissimuler la structure du programme formé par ces codes.

14. Méthode d'identification d'un module de sécurité tel que défini dans l'une quelconque des revendications 1 à 6 et dont les codes informatiques ont été rendus accessibles au public, ce procédé comportant les étapes de :
- extraction des codes informatiques factices parmi les codes informatiques rendus accessibles au public;
- traitement desdits codes informatiques factices selon des règles prédéfinies de façon à en déduire le moyen d'identification dudit module de sécurité.

## Claims

1. Security module comprising a microprocessor, a program memory containing at least one operating program and unique identification means of said module, **characterized in that** these identification means (UA2) are constituted by a set of artificial computer codes, compatible with their execution by said microprocessor of the module and stored in the program memory.

2. Security module according to claim 1, **characterized in that** said computer codes are placed in a specific instruction block.

3. Security module according to claim 1, **characterized in that** said artificial computer codes are divided among the computer codes forming the operating program.

4. Security module according to claim 2 or 3, **characterized in that** said artificial computer codes are not executed by said microprocessor.

5. Security module according to claim 2 or 3, **characterized in that** said artificial computer codes do not modify the execution of the operating program executed by said microprocessor.

6. Security module according to claim 1, **characterized in that** said module includes furthermore a set of artificial computer codes that are neither used for the operation of the security module, nor for the formation of the identification means.

7. Personalization method of a security module by a unique identifier, this module comprising a microprocessor and a programme memory containing at least one operating program, **characterized in that** it includes the following steps:
- generation of a set of unique computer codes called artificial computer codes compatible with their execution by said microprocessor;
- writing of this set of codes in the program memory in specific memory locations.

8. Personalization method according to claim 7, **characterized in that** the artificial computer codes arranged in said specific memory locations are not executed by said microprocessor.

9. Personalization method according to claim 7, **characterized in that** the artificial computer codes arranged in said specific memory locations have no influence on the execution by said microprocessor of the operating program.

10. Personalization method according to claim 8 or 9, **characterized in that** said artificial computer codes forming said unique set are selected from among a computer code library.

11. Personalization method according to claim 7, **characterized in that** said artificial computer codes form an instruction block different from the computer codes forming the operating program.

12. Personalization method according to claim 7, **characterized in that** said artificial computer codes are dispersed among the computer codes constituting the operating program.

13. Personalization method according to any of the claims 7 to 12, **characterized in that** the computer codes are processed in such a way as to conceal the structure of the program formed with these codes.

14. Identification method of a security module as defined in any of the claims 1 to 6 and in which computer codes have been made accessible to the public, this process comprises the following steps:
- extraction of the artificial computer codes from among the computer codes made accessible to the public;
- processing of said artificial computer codes according to preset rules in such a way as to deduce the identification means of said security module.

## Patentansprüche

1. Sicherheitsmodul mit einem Mikroprozessor, einem Programmspeicher, der mindestens ein Betriebsprogramm und ein einziges Identifizierungsmittel des genannten Moduls enthält, **gekennzeichnet dadurch, dass** dieses Identifizierungsmittel (UA2) aus einer Gesamtheit von falschen Computer-Codes besteht, die mit deren Ausführung durch den besagten Mikroprozessor des Moduls vereinbar und in dem Programmspeicher abgespeichert sind.

2. Sicherheitsmodul nach Anspruch 1, **gekennzeichnet dadurch, dass** die genannten Computer-Codes in einem Block von spezifischen Anweisungen platziert sind.

3. Sicherheitsmodul nach Anspruch 1, **gekennzeichnet dadurch, dass** die besagten falschen Computer-Codes unter den Computer-Codes verteilt werden, die das Betriebsprogramm bilden.

4. Sicherheitsmodul nach Anspruch 2 oder 3, **gekennzeichnet dadurch, dass** die besagten falschen Computer-Codes nicht von dem besagten Mikroprozessor ausgeführt werden.

5. Sicherheitsmodul nach Anspruch 2 oder 3, **gekennzeichnet dadurch, dass** die besagten falschen Computer-Codes den Ablauf des durch den genannten Mikroprozessor ausgeführten Betriebsprogramms nicht ändern.

6. Sicherheitsmodul nach Anspruch 1, **gekennzeichnet dadurch, dass** das genannte Modul außerdem eine Gesamtheit von falschen Computer-Codes umfasst, die weder für den Betrieb des Sicherheitsmoduls noch zur Bildung des Identifizierungsmittels benutzt werden.

7. Personalisierungsmethode eines Sicherheitsmoduls durch eine einzige Identifizierung, wobei dieses Modul einen Mikroprozessor und einen Programmspeicher umfasst, der mindestens ein Betriebprogramm enthält, **gekennzeichnet dadurch, dass** diese folgende Schritte umfasst:
. Erzeugung von einer einzigen Gesamtheit von Computer-Codes, die als falsche Computer-Codes bezeichnet werden, die mit ihrer Ausführung durch besagten Mikroprozessor kompatibel sind;
. Einschreiben dieser Gesamtheit von Codes in den Programmspeicher in spezifischen Speicherorten.

8. Personalisierungsmethode nach Anspruch 7, **gekennzeichnet dadurch, dass** die in den besagten spezifischen Speicherorten angeordneten falschen Computer-Codes nicht durch den genannten Mikroprozessor ausgeführt werden.

9. Personalisierungsmethode nach Anspruch 7, **gekennzeichnet dadurch, dass** die in besagten spezifischen Speicherorten angeordneten falschen Computer-Codes keinen Einfluss auf die Ausführung des Betriebsprogramms durch den besagten Mikroprozessor haben.

10. Personalisierungsmethode nach Anspruch 8 oder 9, **gekennzeichnet dadurch, dass** die besagten falschen Computer-Codes, die die besagte einzige Einheit bilden, unter einer Bibliothek von Computer-Codes ausgewählt sind.

11. Personalisierungsmethode nach Anspruch 7, **gekennzeichnet dadurch, dass** die besagten falschen Computer-Codes einen von den Computer-Codes verschiedenen Anweisungsblock bilden, der das Betriebsprogramm bildet.

12. Personalisierungsmethode nach Anspruch 7, **gekennzeichnet dadurch, dass** die besagten falschen Computer-Codes unter den Computer-Codes verteilt sind, die das Betriebsprogramm bilden.

13. Personalisierungsmethode nach einem der Ansprüche 7 bis 12, **gekennzeichnet dadurch, dass** die Computer-Codes so behandelt werden, um die durch diese Codes ausgebildete Struktur des Programms zu verbergen.

14. Identifizierungsmethode von einem Sicherheitsmodul, so wie es in einem der Ansprüche 1 bis 6 definiert ist und wobei die Computer-Codes der Öffentlichkeit zugänglich gemacht wurden, wobei dieses Verfahren folgende Schritte umfasst:
- Entfernung der falschen Computer-Codes unter den Computer-Codes, die der Öffentlichkeit zugänglich gemacht wurden;
- Behandlung der genannten falschen Computer-Codes nach den vorbestimmten Regeln, um daraus das Identifizierungsmittel des genannten Sicherheitsmoduls abzuleiten.
